# EUROPÄISCHE PATENTSCHRIFT

(11) **EP 2 200 853 B1**
(45) Veröffentlichungstag und Bekanntmachung des Hinweises auf die Patenterteilung: **24.04.2013**
(21) Anmeldenummer: 08785475.8
(22) Anmeldetag: 09.08.2008
(51) Int. Cl.: B60K 35/00

(54) **KOMBIINSTRUMENT**
COMBINATION INSTRUMENT
INSTRUMENT COMBINÉ

(30) Priorität: 10.09.2007 DE 102007042652
(43) Veröffentlichungstag der Anmeldung: 30.06.2010
(73) Patentinhaber: Automobili Lamborghini S.P.A., 40019 Sant'Agata Bolognese (IT)
(72) Erfinder: FITZGERALD, Manfred, I-50020 Chiesanuova (IT); PERINI, Filippo, I-29022 Bobbio (IT); REBOTTINI, Corrado, I-40014 Crevalcore (IT); MAZZETTI, Stefano, I-40033 Caslecchio di Reno (IT)
(74) Vertreter: Mader, Wilfried
(86) Internationale Anmeldenummer: PCT/EP2008/006590
(87) Internationale Veröffentlichungsnummer: WO 2009/033537

(56) Entgegenhaltungen:
- EP-A- 1 024 056
- WO-A-98/38059
- WO-A-2007/021263
- DE-A1- 4 307 367
- DE-A1- 10 065 602
- DE-A1- 10 229 875
- DE-A1- 10 249 765
- DE-A1- 19 903 201
- DE-A1- 19 949 548

## Beschreibung

Die Erfindung betrifft ein Kombiinstrument für die Armaturentafel eines Kraftfahrzeugs nach der im Oberbegriff von Anspruch 1 näher definierten Art.

Aus dem allgemeinen Stand der Technik sind verschiedene Kombiinstrumente bekannt. Sie dienen dazu, dem Fahrer Informationen hinsichtlich verschiedener relevanter Daten des Betriebs des Kraftfahrzeugs zu geben.

Häufig werden diese Instrumente für mehrere unterschiedliche Fahrzeuge eines Herstellers oder mehrerer miteinander verbundener Hersteller verwendet, was zwar prinzipiell die Fertigungskosten gegenüber einer Lösung verringert, bei der für jedes Fahrzeug ein separates Kombiinstrument verwendet wird, was jedoch vom ästhetischen Standpunkt aus nicht unbedingt gewollt ist und daher häufig Anpassungen erforderlich macht, die wiederum die Kosten erhöhen.

Ein gattungsgemäßes Kombiinstrument ist aus der EP 1 024 056 A2 bekannt. Hierbei ist eine Anzeigeeinheit vorgesehen, auf welcher Fahrzeugdaten in grafischer oder alphanumerischer Form darstellbar sind. Die Anzeigeeinheit kann mehrere LCD-Bildschirme aufweisen, deren Ansteuerung über einen gemeinsamen Mikrocomputer erfolgen kann.

Die WO 98/38059 A1 beschreibt ein Anzeigesystem für Fahrzeuge, bei denen ein Bildschirm des Anzeigesystems frei programmierbar ist. Unter anderem kann auf dem Bildschirm eine Schaltempfehlung zur Erreichung einer minimalen Drehzahl, die für eine geschätzte Sollleistung ausreicht, angezeigt werden.

Aus der DE 199 03 201 A1 sind eine Anzeigevorrichtung und ein Verfahren zum Darstellen eines Anzeigeinstruments bekannt. Für die Anzeigevorrichtung kann ein Farbdisplay, insbesondere ein Flüssigkristalldisplay und insbesondere ein TFT-Display verwendet werden.

Eine Anzeige- und Bedieneinrichtung für Kraftfahrzeuge, die einen in verschiedene Bereiche unterteilten Flachbildschirm aufweist, ist in der DE 43 07 367 A1 beschreiben. Dabei kann zwischen verschiedenen Darstellungsformen der Einzelanzeigen ausgewählt werden, beispielsweise zwischen einer sportlichen Darstellung oder einer unablesbaren Darstellung.

Einen Öko-Tachometer beschreibt die DE 102 49 765 A1. Dabei wird die Motordrehzahl und der jeweils geschaltete Gang in eine optische Anzeige integriert, wobei je nach eingelegtem Gang eine andere Drehzahlskala eingeführt wird. Dadurch ergibt sich für den Fahrer eine Anzeige des Verhältnisses zwischen der Drehzahl und der Fahrgeschwindigkeit.

Es ist Aufgabe der vorliegenden Erfindung, ein Kombiinstrument für die Armaturentafel eines Kraftfahrzeugs zu schaffen, welches in einfacher Weise für verschiedene Kraftfahrzeuge verwendbar ist und neuartige Anzeigemöglichkeiten bietet.

Erfindungsgemäß wird diese Aufgabe durch die in Anspruch 1 genannten Merkmale gelöst.

Durch die freie Programmierbarkeit des wenigstens einen Displays hinsichtlich der auf demselben angezeigten Daten ist es möglich, auf ein und demselben Kombiinstrument die verschiedensten Arten von Daten in Verbindung mit den verschiedensten Designs darzustellen. Dadurch kann das erfindungsgemäße Kombiinstrument bei den verschiedensten Fahrzeugen eingesetzt werden, ohne dass der Eindruck entseht, es handele sich um ein und dasselbe Instrument. Des weiteren lassen sich auf diese Art und Weise Kosten einsparen, da nur eine geringe Anzahl an unterschiedlichen Anbauteile, beispielsweise nur ein unterschiedliches Gehäuse, erforderlich ist, um ein Kombiinstrument an unterschiedliche Gegebenheiten des Armaturenbretts des jeweiligen Kraftfahrzeugs anzupassen. Des weiteren kann durch die freie Programmierbarkeit des wenigstens einen Displays im Falle eines Facelifts eines Fahrzeugmodells oder im Falle von Überarbeitungen auch bei sich bereits seit längerem im Einsatz befindlichen Fahrzeugen eine Aktualisierung des Kombiinstruments vorgenommen werden.

Die erfindungsgemäße Umschaltbarkeit des Displays zwischen wenigstens zwei unterschiedlichen Konfigurationen ermöglicht dem Fahrer des Kraftfahrzeugs vorteilhafterweise die Wahl zwischen verschiedenen Ansichten seines Cockpits und damit zwischen verschiedenen Arten, wie er die Informationen über die fahrzeugrelevanten Daten erhält. Des weiteren kann auf diese Weise eine einfache Anpassung des Kombiinstruments an verschiedene Fahrzeuge erreicht werden.

Eine verbesserte Darstellbarkeit der Daten, insbesondere was die Übersichtlichkeit derselben bei einer großen Datenmenge anbelangt, ist dadurch möglich, dass mindestens drei frei programmierbare Displays vorgesehen sind.

Des weiteren ist erfindungsgemäß vorgesehen, dass auf dem ersten Display die Geschwindigkeit, auf dem zweiten Display die Drehzahl und auf dem dritten Display die Beschleunigung des Kraftfahrzeugs anzeigbar ist. Dies stellt eine besonders schnelle und sichere Zuordnung und Verarbeitung der von dem Fahrer aufzunehmenden Daten sicher, wobei selbstverständlich auf jedem der Displays auch weitere Daten angezeigt werden können.

Insbesondere wenn das Kraftfahrzeug mit einem elektronischen Getriebe ausgestattet ist, ist es vorteilhaft, dass auf dem zweiten Display zusätzlich zu der Drehzahl der in einem Getriebe des Kraftfahrzeugs eingelegte Gang anzeigbar ist.

Um eine optimale Ermittlung und Aufbereitung der fahrzeugrelevanten Daten zu ermöglichen, kann des weiteren vorgesehen sein, dass sämtliche Displays über wenigstens ein Steuergerät mit einem Sensor zum Messen der relevanten Daten des Betriebs des Kraftfahrzeugs verbunden sind.

Für bestimmte Anwendungen bzw. Nutzungsfälle des Kraftfahrzeugs kann es sinnvoll sein, wenn auf dem ersten Display zusätzlich zu der Geschwindigkeit die von einer Brennkraftmaschine abgegebene Leistung anzeigbar ist.

Des weiteren kann vorgesehen sein, dass das dritte Display mit einem Beschleunigungsmesser verbunden ist. Insbesondere bei sportlichen Einsätzen des mit dem erfindungsgemäßen Kombiinstrument ausgestatteten Kraftfahrzeugs stellt dies eine nützliche zusätzliche Information für den Fahrer dar.

Weitere vorteilhafte Ausgestaltungen und Weiterbildungen der Erfindung ergeben sich aus den restlichen Unteransprüchen. Nachfolgend ist ein Ausführungsbeispiel der Erfindung anhand der Zeichnung prinzipmäßig dargestellt.

Es zeigt:
- Fig. 1: das erfindungsgemäße Kombiinstrument in einer ersten Konfiguration; und
- Fig. 2: das Kombiinstrument aus Fig. 2 in einer zweiten Konfiguration.

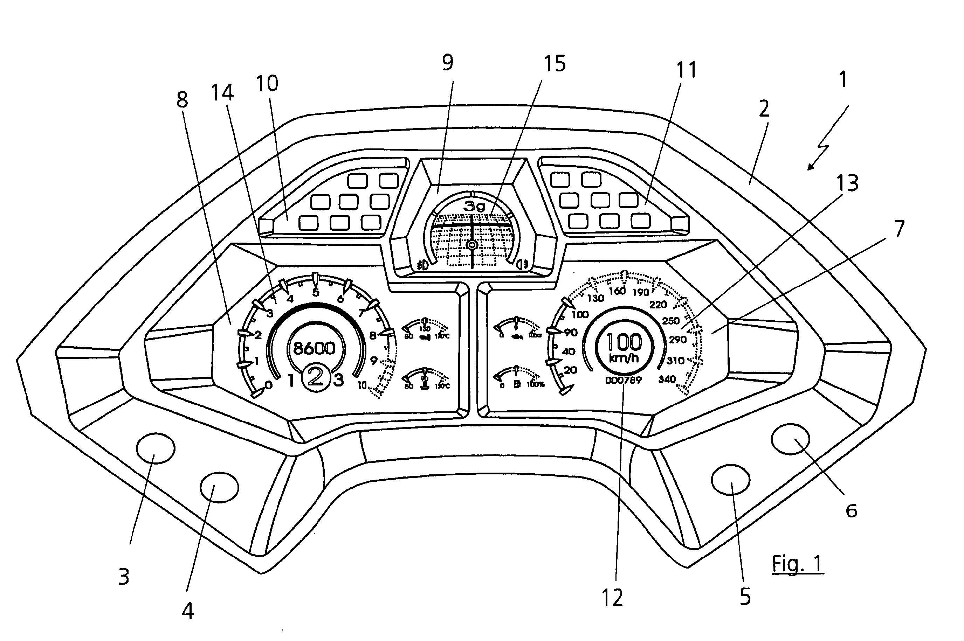

Fig. 1 zeigt ein Kombiinstrument 1 für eine in ihrer Gesamtheit nicht dargestellte Armaturentafel eines Kraftfahrzeugs, das ebenfalls nicht dargestellt ist. Da die Anordnung des Kombiinstruments 1 innerhalb der Armaturentafel und die Anordnung der Armaturentafel im Innenraum des Kraftfahrzeugs an sich bekannt sind, wird hierin nicht näher darauf eingegangen.

Das Kombiinstrument 1 weist ein Gehäuse 2 auf, an dem im vorliegenden Fall vier Schalter 3, 4, 5 und 6 angebracht sind, deren Funktion zu einem späteren Zeitpunkt näher erläutert wird. Innerhalb des Gehäuses 2 weist das Kombiinstrument 1 insgesamt fünf Displays 7, 8, 9, 10 und 11 auf, von denen die beiden großen Displays 7 und 8, die nachfolgend als erstes Display 7 und zweites Display 8 bezeichnet werden, sowie das zentral oberhalb dieser beiden Displays angeordnete, dritte Display 9 als TFT-Displays ausgebildet sind. Auf den Displays 7, 8 und 9 sind die verschiedensten, zum Teil nachfolgend detailliert beschriebenen, relevanten Daten des Betriebs des Kraftfahrzeugs anzeigbar. Die beiden weiteren Displays 10 und 11, die links und rechts von dem dritten Display 9 angeordnet sind, sind mit LED-Anzeigeelementen ausgestattet, die nicht näher bezeichnet sind und ebenfalls verschiedene Anzeigefunktionen relevanter Daten des Betriebs des Kraftfahrzeugs übernehmen können, wie eine Blinkeranzeige, eine ABS-Funktionsanzeige, eine Batterieanzeige und vieles mehr.

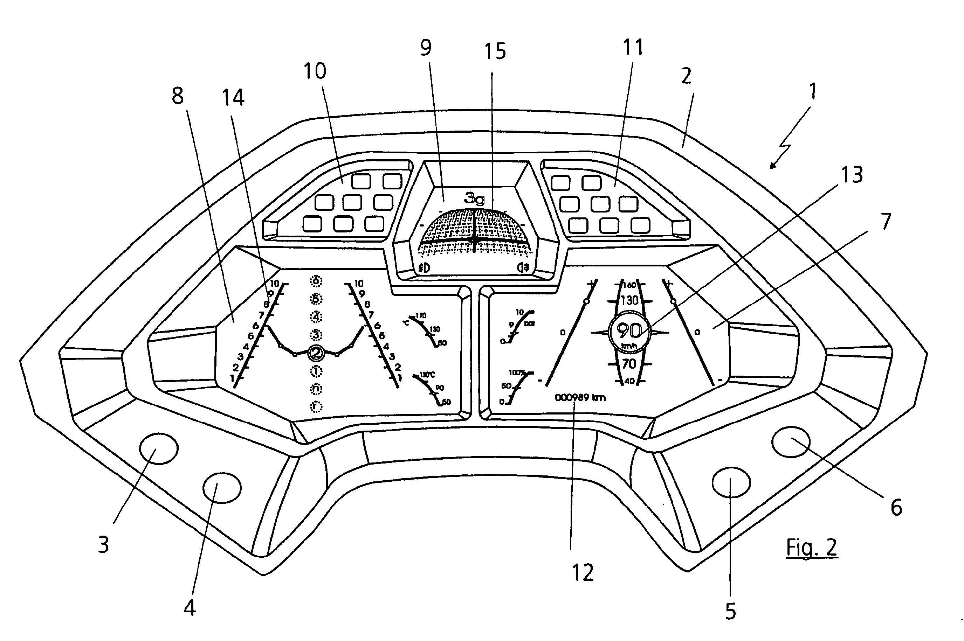

Von den oben genannten Schaltern 3, 4, 5 und 6 dient der erste Schalter 3 zur Einstellung der Helligkeit des Kombiinstruments 1, insbesondere der Displays 7, 8, 9, 10 und 11, der zweite Schalter 4 dient zur Rückstellung eines auf dem zweiten Display 8 vorgesehenen Kilometerzählers 12, der dritte Schalter 5 dient zur Rückstellung nicht näher beschriebener Funktionen des Kombiinstruments 1 und der vierte Schalter 6 ermöglicht ein Umschalten der Displays 7, 8 und 9 zwischen wenigstens zwei unterschiedlichen Konfigurationen des Kombiinstruments 1. Im vorliegenden Fall muss der vierte Schalter 6 hierzu länger als zwei Sekunden gedrückt werden. Prinzipiell sind auch mehr als die beiden in den Figuren 1 und 2 dargestellten Konfigurationen bzw. Moden des Kombiinstruments 1 denkbar. Die erste dieser Konfigurationen des Kombiinstruments 1 ist im vorliegenden Fall eine in Fig. 1 dargestellte Normal-Konfiguration bzw. ein Normal-Modus und die andere ist eine in Fig. 2 dargestellte Rennsport-Konfiguration bzw. ein Rennsport-Modus, d.h. eine Konfiguration, die insbesondere dann sinnvoll ist, wenn das mit dem Kombiinstrument 1 ausgestatte Kraftfahrzeug auf einer Rennstrecke eingesetzt wird. Aus einem Vergleich der beiden Figuren 1 und 2 wird deutlich, dass es sich bei den beiden Konfigurationen um vollkommen unterschiedliche Darstellungen handelt. Für den Einsatz in einem anderen Kraftfahrzeug könnten diese Konfigurationen noch sehr viel größere Unterschiede aufweisen.

Die drei als TFT-Displays ausgebildete Displays 7, 8 und 8 sind hinsichtlich der auf denselben angezeigten Daten frei programmierbar. Dies bedeutet, dass durch eine entsprechende Ansteuerung mittels einer geeigneten Software jedes beliebige Bild auf denselben angezeigt werden kann. Im vorliegenden Fall wird auf dem ersten Display 7 sowohl in der Normal-Konfiguration als auch in der Rennsport-Konfiguration auf einem Tachometer 13 die Geschwindigkeit angezeigt, und zwar in der Normal-Konfiguration sowohl auf einer umlaufenden Anzeige mittels eines virtuellen, sich bewegenden Zeigers, als auch auf einer Digitalanzeige, d.h. als sich mit der Geschwindigkeit verändernde Zahl. In der Rennsport-Konfiguration ist der Tachometer lediglich als Digitalanzeige ausgebildet. Zusätzlich wird auf dem ersten Display 7 sowohl in der Normal- als auch in der Rennsport-Konfiguration, jedoch ebenfalls mittels verschiedener Arten der Darstellung, der Öldruck und der Füllzustand eines Fahrzeugtanks angezeigt. Auf dem ersten Display 7 kann außerdem auf nicht dargestellte Art und Weise das von einer die Umgebung des Kraftfahrzeugs aufzeichnenden Kamera aufgenommene Bild angezeigt werden, wenn dies vom Fahrer ausgewählt wird. Hierbei kann es sich sowohl um eine Front- als auch um eine Rückfahrkamera handeln. Zur Anzeige des Bilds kann der Tachometer 13 gegebenenfalls ausgeblendet werden. In der Rennsport-Konfiguration ist auf dem ersten Display 7 zusätzlich zu der Geschwindigkeit die von einer Brennkraftmaschine bzw. einem Motor des Kraftfahrzeugs abgegebene Leistung als Prozentanteil der maximalen Leistung anzeigbar, und zwar mittels eines sich entlang einer jeweiligen schrägen Linie zwischen 0 und 100 % bewegenden Punktes.

Auf dem zweiten Display 8 wird die Drehzahl des Motors auf einem Drehzahlmesser 14 angezeigt, wobei wiederum die Darstellung in der Normal- Konfiguration von der Darstellung in der Rennsport-Konfiguration abweicht. Während in der Normal-Konfiguration die Drehzahl sowohl auf einer umlaufenden Anzeige mittels eines virtuellen, sich bewegenden Zeigers, als auch auf einer Digitalanzeige ablesbar ist und damit der Drehzahlmesser 14 in diesem Fall optisch an den Tachometer 13 der Normal-Konfiguration angepasst ist, sind bei dem Drehzahlmesser 14 in der Rennsport-Konfiguration zwei schräg verlaufende Skalen vorgesehen, die mit die Drehzahl symbolisierenden Zahlen versehen sind, wodurch eine optische Anpassung an die Darstellung der Leistung der Brennkraftmaschine in dem ersten Display 7 gegeben ist. Zusätzlich zu der Drehzahl ist auf dem zweiten Display 8 der in einem Getriebe des Kraftfahrzeugs eingelegte Gang anzeigbar, indem eine entsprechende Zahl kreisförmig umrahmt wird. In der Rennsport-Konfiguration ist außerdem die angezeigte Drehzahl mit der Anzeige des in dem Getriebe eingelegten Gangs visuell verbunden, d. h. von dem im vorliegenden Fall die Zahl "2" für den eingelegten zweiten Gang umrahmenden Kreis verlaufen jeweilige Linien zu demjenigen Punkt auf der Skala des Drehzahlmesser 14, der der aktuellen Drehzahl entspricht, im vorliegenden Fall also zu der Zahl 6" für eine Motordrehzahl von 6000. Diese Linie bietet also eine dynamische Anzeige des Zusammenhangs zwischen dem eingelegten Gang und der Motordrehzahl. Des weiteren sind in dem zweiten Display 8 jeweilige Anzeigen für eine Öltemperatur und eine Kühlwassertemperatur vorgesehen, und zwar wiederum in unterschiedlicher optischer Ausgestaltung für die beiden Konfigurationen.

Auf dem dritten Display 9 ist mittels eines sich in einem Feld 15 bewegenden Punktes die Beschleunigung des Kraftfahrzeugs anzeigbar, wozu das dritte Display 9 mit einem nicht dargestellten, vorzugsweise in dem Kombiinstrument 1 angeordneten Beschleunigungsmesser verbunden ist. Auf diese Weise kann sowohl eine Beschleunigung als auch eine Verzögerung des Kraftfahrzeugs und auch eine Seitenbeschleunigung desselben visualisiert werden, was insbesondere bei Rennsport-Einsätzen des Kraftfahrzeugs nützlich sein kann, da hierdurch dem Fahrer auch visuell ein Eindruck bzw. ein Feedback vom Fahrzustand seines Fahrzeugs, insbesondere hinsichtlich der Seitenbeschleunigung bei Kurvenfahrten, vermittelt wird. Das dritte Display 9 sieht auch eine digitale Anzeige der aktuellen Beschleunigung in Form einer oberhalb des Felds 15 angeordneten, sich entsprechend der aktuellen Beschleunigung verändernden Zahl vor. Unterhalb des Felds 15 sind im vorliegenden Fall weitere Anzeigebereiche vorgesehen, in denen beispielsweise der Schaltzustand einer Nebelbeleuchtung des Kraftfahrzeugs dargestellt werden kann. Allgemein können dort jedoch hinsichtlich ihrer Form, Farbe und Anzahl vollkommen frei programmierbare Piktogramme vorgesehen sein, die beispielsweise den Betriebszustand eines Allradantriebs, eines Katalysators oder eines Spoilers sowie verschiedene Warnhinweise anzeigen können. Es ist dabei also möglich, auf einer relativ kleinen Fläche eine große Anzahl verschiedener Informationen zu vermitteln, da durch die freie Programmierbarkeit auf ein und derselben Fläche unterschiedliche Inforationen angezeigt werden können. Wenn dies beispielsweise aufgrund eines zu geringen Platzangebots der Displays 10 und 11 erforderlich ist, können in diesem Bereich auch feste Anzeigen in Form von LED's vorgesehen sein, beispielsweise für die oben genannte und in den Figuren dargestellten Anzeigen der Nebelbeleuchtung des Kraftfahrzeugs.

Im Einschaltzustand des Kraftfahrzeugs und damit auch des Kombiinstruments 1 ist üblicherweise, wenn dies nicht vom Fahrer anders ausgewählt wird, die Normal-Konfiguration eingestellt. In manchen Ländern kann dies sogar Pflicht sein. Das dritte Display 9 kann im Einschaltzustand beispielsweise den Schließzustand der Türen des Kraftfahrzeugs anzeigen und erst durch entsprechende Anwahl, beispielsweise durch kurzes Drücken des vierten Schalters 6, in den Zustand versetzt werden, in dem der Beschleunigungsmesser aktiviert ist. Auch dies kann in einigen Ländern Pflicht sein. Für bestimmte Länder können auch andersartig ausgestaltete oder zusätzliche Kilometerzähler 12 und Tachometer 13 eingesetzt werden, insbesondere um die Geschwindigkeit und die zurückgelegte Wegstrecke auch in Meilen anzuzeigen.

Sämtliche Displays 7, 8 und 9, vorzugsweise auch die Displays 10 und 11, sind über wenigstens ein nicht dargestelltes Steuergerät mit einem jeweiligen Sensor zum Messen der relevanten, auf den Displays 7, 8, 9, 10 und 11 angezeigten Daten des Betriebs des Kraftfahrzeugs, also beispielsweise einem Geschwindigkeits- oder einem Drehzahlsensor, verbunden. Hierfür kann es sinnvoll sein, einen CAN-Bus oder eine ähnliche Leitungsverbindung einzusetzen.

## Patentansprüche

1. Kombiinstrument (1) für die Armaturentafel eines Kraftfahrzeugs, mit wenigstens einem Display (7,8,9), auf dem relevante Daten des Betriebs des Kraftfahrzeugs anzeigbar sind, wobei das wenigstens eine Display (7,8,9) hinsichtlich der auf demselben angezeigten Daten frei programmierbar ist, wobei das Display (7,8,9) zwischen wenigstens zwei unterschiedlichen Konfigurationen umschaltbar ist, und wobei mindestens drei frei programmierbare Displays (7,8,9) vorgesehen sind,
**dadurch gekennzeichnet, dass**
auf dem ersten Display (7) die Geschwindigkeit, auf dem zweiten Display (8) die Drehzahl und auf dem dritten Display (9) die Beschleunigung des Kraftfahrzeugs anzeigbar ist, dass zumindest in einer der Konfigurationen auf dem zweiten Display (8) zusätzlich zu der Drehzahl der in einem Getriebe des Kraftfahrzeugs eingelegte Gang anzeigbar ist, und dass zumindest in einer der Konfigurationen die angezeigte Drehzahl mit der Anzeige des in dem Getriebe eingelegten Gangs durch jeweilige, von der Anzeige des in dem Getriebe eingelegten Gangs zu demjenigen Punkt auf der Skala des Drehzahlmessers (14), der der aktuellen Drehzahl entspricht, verlaufende Linien visuell verbunden ist.

2. Kombiinstrument nach Anspruch 1,
**dadurch gekennzeichnet, dass**
sämtliche Displays (7,8,9) über wenigstens ein Steuergerät mit einem Sensor zum Messen der relevanten Daten des Betriebs des Kraftfahrzeugs verbunden sind.

3. Kombiinstrument nach Anspruch 1 oder 2,
**dadurch gekennzeichnet, dass**
zumindest in einer der Konfigurationen auf dem ersten Display (7) zusätzlich zu der Geschwindigkeit die von einer Brennkraftmaschine abgegebene Leistung anzeigbar ist.

4. Kombiinstrument nach einem der Ansprüche 1 bis 3,
**dadurch gekennzeichnet, dass**
das dritte Display (9) mit einem Beschleunigungsmesser verbunden ist.

5. Kombiinstrument nach einem der Ansprüche 1 bis 4,
**dadurch gekennzeichnet, dass**
auf dem wenigstens einen Display (7,8,9) das von einer die Umgebung des Kraftfahrzeugs aufzeichnenden Kamera aufgenommene Bild anzeigbar ist.

6. Kombiinstrument nach einem der Ansprüche 1 bis 5,
**dadurch gekennzeichnet, dass**
das wenigstens eine Display (7,8,9) als TFT-Display ausgebildet ist.

7. Kombiinstrument nach einem der Ansprüche 1 bis 6,
**dadurch gekennzeichnet, dass**
eine der Konfigurationen eine Normal- und die andere eine Rennsport-Konfiguration ist.

8. Kombiinstrument nach einem der Ansprüche 1 bis 7,
**dadurch gekennzeichnet, dass**
die beiden Konfigurationen mittels eines Schalters (6) einstellbar sind.

9. Kombiinstrument nach einem der Ansprüche 1 bis 8,
**dadurch gekennzeichnet, dass**
zwei weitere Displays (10,11) mit LED-Anzeigeelementen vorgesehen sind.

## Claims

1. Instrument cluster (1) for the instrument panel of a motor vehicle, comprising at least one display (7, 8, 9) on which relevant operational data of the motor vehicle can be displayed, the at least one display (7, 8, 9) being freely programmable with respect to the data displayed on it, it being possible to switch the display (7, 8, 9) between at least two different configurations, and at least three freely programmable displays (7, 8, 9) being provided, **characterised in that** the speed can be displayed on the first display (7), the rpm on the second display (8) and the acceleration of the motor vehicle on the third display (9), **in that**, at least in one of the configurations, the gear engaged in a transmission of the motor vehicle can be displayed on the second display (8) in addition to the rpm, and **in that**, at least in one of the configurations, the displayed rpm is visually linked to the display of the gear engaged in the transmission by respective lines extending from the display of the gear engaged in the transmission to the point on the scale of the rpm counter (14) corresponding to the current rpm.

2. Instrument cluster according to claim 1, **characterised in that** all the displays (7, 8, 9) are connected via at least one control device to a sensor for measuring the relevant operational data of the motor vehicle.

3. Instrument cluster according to either claim 1 or claim 2, **characterised in that**, at least in one of the configurations, the power delivered by an internal combustion engine can be displayed on the first display (7) in addition to the speed.

4. Instrument cluster according to any of claims 1 to 3, **characterised in that** the third display (9) is connected to an accelerometer.

5. Instrument cluster according to any of claims 1 to 4, **characterised in that** the picture taken by a camera recording the surroundings of the motor vehicle can be displayed on the at least one display (7, 8, 9).

6. Instrument cluster according to any of claims 1 to 5, **characterised in that** the at least one display (7, 8, 9) is designed as a TFT display.

7. Instrument cluster according to any of claims 1 to 6, **characterised in that** one of the configurations is a normal configuration and the other is a racing configuration.

8. Instrument cluster according to any of claims 1 to 7, **characterised in that** the two configurations can be set by means of a switch (6).

9. Instrument cluster according to any of claims 1 to 8, **characterised in that** two other displays (10, 11) are provided with LED display elements.

## Revendications

1. Instrument combiné (1) pour le tableau de bord d'un véhicule automobile, comprenant au moins un affichage (7, 8, 9), sur lequel on peut afficher des données pertinentes du fonctionnement du véhicule à moteur, dans lequel le au moins un affichage (7, 8, 9) peut être programmé librement en ce qui concerne les données qui y sont affichées, dans lequel on peut faire passer l'affichage (7, 8, 9) entre au moins deux configurations différentes et dans lequel au moins trois affichages librement programmables (7, 8, 9) sont prévus,
**caractérisé en ce que** :
on peut afficher sur le premier affichage (7) la vitesse, sur le deuxième affichage (8) le nombre de tours et sur le troisième affichage (9) l'accélération du véhicule à moteur, **en ce qu'**au moins dans l'une des configurations, on peut afficher sur le deuxième affichage (8), en plus du nombre de tours, la vitesse passée dans une transmission du véhicule à moteur, et **en ce que**, au moins dans l'une des configurations, on relie visuellement le nombre de tours affiché avec l'affichage de la vitesse passée dans la transmission par des lignes respectives s'étendant de l'affichage de la vitesse passée dans la transmission au point de l'échelle du tachymètre (14), qui correspond au nombre de tours réel.

2. Instrument combiné selon la revendication 1, **caractérisé en ce que**
tous les affichages (7, 8, 9) sont raccordés, via au moins un appareil de commande, à un capteur pour mesurer les données pertinentes du fonctionnement du véhicule automobile.

3. Instrument combiné selon la revendication 1 ou la revendication 2,
**caractérisé en ce que**,
au moins dans l'une des configurations, sur le premier affichage (7), on peut afficher, en plus de la vitesse, la puissance délivrée par un moteur à combustion interne.

4. Instrument combiné selon l'une quelconque des revendications 1 à 3,
**caractérisé en ce que** :
le troisième affichage (9) est raccordé à un indicateur d'accélération.

5. Instrument combiné selon l'une quelconque des revendications 1 à 4,
**caractérisé en ce que**,
sur le au moins un affichage (7, 8, 9), on peut afficher l'image prise par une caméra qui enregistre l'environnement du véhicule à moteur.

6. Instrument combiné selon l'une quelconque des revendications 1 à 5,
**caractérisé en ce que** :
le au moins un affichage (7, 8, 9) se présente sous la forme d'un affichage TFT.

7. Instrument combiné selon l'une quelconque des revendications 1 à 6,
**caractérisé en ce que** :
l'une des configurations est une configuration normale et l'autre une configuration de sport automobile de course.

8. Instrument combiné selon l'une quelconque des
revendications 1 à 7,
**caractérisé en ce que** :
les deux configurations peuvent être réglées au moyen d'un commutateur (6).

9. Instrument combiné selon l'une quelconque des revendications 1 à 8,
**caractérisé en ce que** :
deux autres affichages (10, 11) sont pourvus d'éléments d'affichage DEL.
